# FASCICULE DE BREVET EUROPEEN

(11) **EP 1 533 558 B1**
(45) Date de publication et mention de la délivrance du brevet: **26.12.2012**
(21) Numéro de dépôt: 04025979.8
(22) Date de dépôt: 02.11.2004
(51) Int. Cl.: F16L 37/12

(54) **Dispositif pour le raccordement coaxial de deux tubulures**
Koaxiale Rohrverbindung
Coaxial pipe coupling

(30) Priorité: 24.11.2003 FR 0313726
(43) Date de publication de la demande: 25.05.2005
(73) Titulaire: VALEO SYSTEMES THERMIQUES, 78320 Le Mesnil Saint-Denis (FR)
(72) Inventeur: Vincent, Philippe, 28230 Epernon (FR)

(56) Documents cités:
- DE-A- 19 921 682
- DE-A- 19 964 221
- US-B1- 6 250 693
- US-B1- 6 409 228

## Description

L'invention concerne le raccordement coaxial, bout à bout, de deux tubulures dans un circuit de fluide, notamment dans un véhicule automobile.

Elle concerne plus particulièrement un dispositif pour le raccordement coaxial de deux tubulures, par coopération d'une région d'extrémité d'une première tubulure avec une région d'extrémité d'une seconde tubulure, la première tubulure comportant un bourrelet propre à être reçu dans une collerette de la seconde tubulure, le dispositif comprenant un collier ouvert réalisé en un matériau élastiquement déformable et présentant un fond se prolongeant par deux branches ayant des extrémités respectives qui définissent l'ouverture du collier et qui sont susceptibles de s'écarter lors de la mise en place du collier ouvert dans une direction d'introduction généralement radiale par rapport à l'axe des tubulures et de se rapprocher ensuite après mise en place du collier ouvert.

On connaît déjà des dispositifs de raccordement de ce type qui sont utilisés plus particulièrement pour assurer une connexion à l'intérieur d'un circuit de fluide caloporteur dans un véhicule automobile. A cet effet, une application particulière d'un tel dispositif est le raccordement d'une tubulure d'entrée ou de sortie d'un échangeur de chaleur, dans lequel le fluide caloporteur doit échanger de la chaleur avec un autre milieu, et une conduite amenant le fluide dans ou hors de cet échangeur de chaleur.

Par le terme "tubulure" on entend désigner ici généralement tout moyen de transfert de fluide, qui comprend au moins une partie tubulaire, telle que, par exemple, un tube, un conduit, un embout, une entretoise, etc.

Le dispositif de raccordement a pour fonction de solliciter axialement l'un vers l'autre la collerette et le bourrelet pour assurer l'étanchéité, de préférence en serrant entre eux de façon étanche au fluide un joint annulaire d'étanchéité.

On connaît déjà, notamment par FR 2 738 894 ou DE 199 64 221A, un dispositif de raccordement de ce type qui est réalisé sous la forme d'un collier ouvert, généralement en forme de C, et qui est assemblé selon un mouvement radial, c'est à dire perpendicu laire à l'axe commun des tubulures.

Dans ces solutions connues, le choix du matériau constitutif du collier est essentiel pour assurer une bonne liaison mécanique. Il s'agit d'un collier métallique, généralement en acier à ressort, le choix de ce matériau étant justifié par le besoin d'une souplesse suffisante pour permettre au collier de s'écarter au passage au-dessus des tubulures et d'être en même temps suffisamment rigide pour garantir le maintien des tubulures et empêcher une extraction trop facile du collier, après sa mise en place.

Ces solutions connues ont notamment pour inconvénient d'utiliser un matériau coûteux qui, de surcroît, doit subir un traitement anti-corrosion d'un coût élevé, si bien que le prix global du composant est peu compétitif par rapport à une solution qui utiliserait une matière plastique.

En outre, bien que ce collier soit maintenu sur les tubulures par l'effet ressort du matériau utilisé, il reste néanmoins vulnérable à l'extraction.

Or, pour certaines liaisons fluidiques qui impliquent des risques, il est nécessaire de garantir l'empêchement d'un désassemblage du collier sous un effort très important.

Par ailleurs, l'assemblage du collier sur les tubulures pose également des difficultés. En effet, les extrémités du collier métallique sont définies pour être en appui sur la périphérie de la collerette, du bourrelet ou des tubulures, et ainsi pouvoir s'écarter dès qu'une pression radiale d'assemblage est exercée.

Dans ces solutions connues, le collier ne dispose pas de butée de retenue axiale qui permettrait de le guider au départ de son mouvement d'assemblage. Il en résulte donc un risque important de mauvais montage du collier sur les tubulures et donc un risque de ne pas assurer la fonction d'étanchéité requise.

L'invention a notamment pour but de surmonter les inconvénients précités.

Elle propose à cet effet un dispositif de raccordement du type défini précédemment, dans lequel le collier ouvert est muni de butées de retenue propres à exercer un appui axial contre la collerette et contre le bourrelet pour les solliciter l'un vers l'autre, et dans lequel le collier ouvert est en outre muni d'au moins un organe de verrouillage situé dans la région du fond et agencé pour coopérer avec une région d'engagement prévue dans la région d'extrémité de l'une au moins des tubulures afin d'empêcher le collier ouvert, une fois mis en place, de se déplacer dans une direction opposée à sa direction d'introduction.

Comme dans les solutions connues, le collier ouvert est déformable et est donc maintenu sur les régions d'extrémité des tubulures par déformation élastique.

Cependant, comme ce collier ouvert dispose d'au moins un organe de verrouillage qui coopère avec l'une au moins des régions d'extrémités des tubulures, cela empêche tout démontage intempestif du collier, une fois mis en place.

Il en résulte une plus grande sécurité. Dans ces conditions, l'utilisation d'un matériau métallique, en particulier d'un acier à ressort, n'est plus nécessaire pour réaliser le collier ouvert.

La présence de l'organe de verrouillage rend le collier ouvert pratiquement indémontable, sauf à déformer ou casser volontairement l'organe de verrouillage pour permettre le démontage du collier.

D'autres caractéristiques, complémentaires et/ou alternatives, de l'invention sont les suivantes :
- l'organe de verrouillage est réalisé sous la forme d'une languette déformable dont une extrémité est rattachée à un bord périphérique du collier et dont une autre extrémité est munie d'une dent s'étendant dans une direction sensiblement axiale et agencée pour coopérer avec la région d'engagement;
- la languette déformable s'étend dans une direction sensiblement radiale à partir du bord périphérique du collier ouvert;
- le collier ouvert comprend deux flancs en forme générale de C espacés axialement, tandis que l'organe de verrouillage est découpé dans l'un des flancs ;
- les deux flancs en forme générale de C du collier ouvert sont reliés entre eux par des ponts de matière qui s'étendent dans la direction axiale ;
- chacune des butées de retenue présente une section générale en forme de U avec deux branches d'appui découpées respectivement dans les deux flancs du collier ouvert ;
- le collier ouvert comprend au moins deux organes de verrouillage qui alternent avec des butées de retenue ;
- le collier ouvert admet un axe de symétrie passant par le milieu de l'ouverture et il comprend deux organes de verrouillage qui s'étendent symétriquement de part et d'autre de l'axe de symétrie ;
- les extrémités des branches du collier ouvert sont munies de profils de guidage pour faciliter l'écartement des branches lors de la mise en place du collier ouvert et faciliter l'engagement des butées de retenue ;
- le fond du collier ouvert est incurvé ;
- un jeu annulaire est ménagé entre la collerette et le collier ouvert pour la mise en place d'une lèvre d'étanchéité ;
- l'organe de verrouillage est réalisé démontable par rupture ou déformation ;
- le collier ouvert est réalisé dans une matière plastique.

Sous un autre aspect, l'invention concerne un jeu de tubulu res, comprenant une première tubulure ayant une région d'extrémité agencée pour coopérer avec une région d'extrémité d'une seconde tubulure, la première tubulure comportant un bourrelet propre à être reçu dans la collerette de la seconde tubulure, le jeu de tubulures étant raccordé au moyen d'un dispositif de raccordement tel que défini précédemment, l'une au moins des tubulures étant aménagée pour définir au moins une région d'engagement pour l'organe de verrouillage.

A titre d'exemple, cette région d'engagement peut être un espace annulaire entre le bourrelet et la collerette, ou encore une fente aménagée dans une face annulaire de la collerette.

Dans la description qui suit, faite seulement à titre d'exemple, on se réfère aux dessins annexés, sur lesquels :
- la figure 1 est une vue en coupe d'un dispositif de raccordement de tubulures selon l'invention, la coupe étant prise suivant la ligne I-I de la figure 2 ;
- la figure 2 est une vue en coupe selon la ligne II-II de la figure 1 ;
- la figure 3 est un détail, à échelle agrandie, de la figure 1 ;
- les figures 4, 5 et 6 illustrent trois étapes de mise en place du dispositif de raccordement des figures 1 à 3 ;
- la figure 7 est une vue en coupe analogue à la figure 1, dans laquelle une lèvre souple d'étanchéité est adjointe au dispositif de raccordement ; et
- la figure 8 est une vue partielle en coupe montrant la coopération d'un organe de verrouillage dans une variante de réalisation.

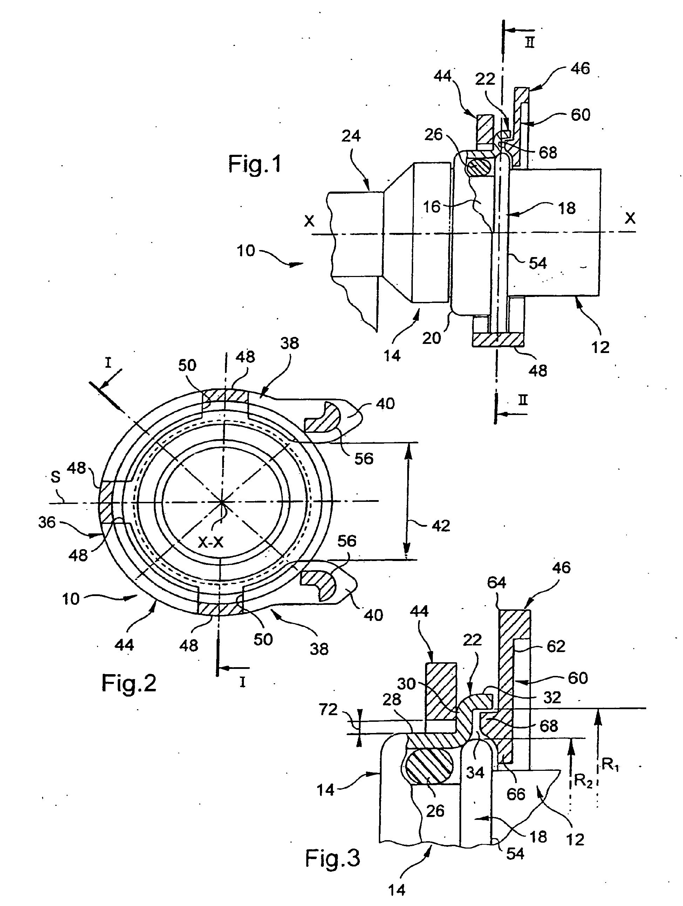

On se réfère d'abord aux figures 1 et 2 qui montrent un dispositif de raccordement réalisé sous la forme d'un collier ouvert 10 et utilisé pour le raccordement coaxial (axe XX) d'une première tubulure 12, ou tubulure mâle, et d'une seconde tubulure 14, ou tubulure femelle. La tubulure 12 comporte une région d'extrémité 16 munie d'un bourrelet périphérique 18 qui définit un rebord annulaire, tandis que la tubulure 14 comprend une région d'extrémité 20 qui définit une collerette 22 dans laquelle vient s'engager, au moins en partie, le bourrelet 18. Les régions d'extrémité 16 et 20 sont conçues pour coopérer mutuellement, ici par emboîtement.

Dans l'exemple, la tubulure 14 constitue une tubulure d'entrée ou de sortie d'un échangeur de chaleur 24 (représenté partiellement), tandis que la tubulure 12 constitue une conduite amenant un fluide caloporteur dans ou hors de cet échangeur de chaleur. Dans une application préférentielle de l'invention, l'échangeur de chaleur 24 constitue un radiateur de refroidissement d'un moteur de véhicule automobile ou encore un radiateur de chauffage de l'habitacle d'un tel véhicule.

Pour réaliser une liaison étanche entre les deux tubulures, un joint annulaire d'étanchéité 26 est inséré au montage entre la collerette et le bourrelet, le collier ouvert 10 étant agencé pour solliciter axialement l'un vers l'autre le bourrelet 18 et la collerette 22 pour comprimer le joint 26 et garantir l'étanchéité.

Sur le détail de la figure 3, on voit que la collerette 22 prolonge une partie cylindrique 28 de la tubulure 14 et qu'elle présente une section en forme de L avec une partie annulaire 30 et une partie cylindrique 32. La partie cylindrique 32 définit un rayon intérieur R1 (figure 3) supérieur au rayon extérieur R2 du bourrelet 18, ce qui permet de définir une région annulaire 34, appelée aussi région d'engagement, dont la fonction sera expliquée plus loin.

Le collier ouvert 10 (figure 2) est adapté pour s'engager latéralement (assemblage radial) sur les deux tubulures 12 et 14 dont les régions d'extrémité ont préalablement été emboîtées. Le collier ouvert 10 est réalisé en un matériau élastiquement déformable. Dans l'exemple de réalisation, il présente un fond incurvé 36 se prolongeant par deux branches 38 ayant des extrémités respectives 40 qui définissent une ouverture 42. Le collier ouvert admet un axe de symétrie S qui passe par le milieu de l'ouverture 42.

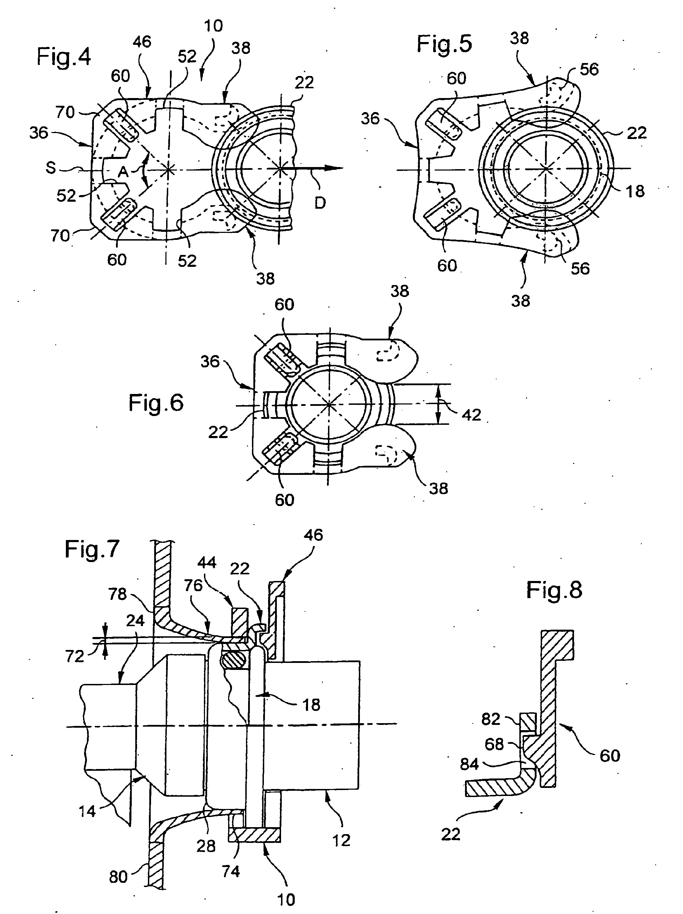

Dans l'exemple, le collier ouvert 10 comprend deux flancs en forme générale de C, à savoir un flanc 44 situé à gauche de la figure 1, et que l'on voit aussi sur la figure 2, et un flanc 46 représenté à droite de la figure 1, et que l'on voit aussi sur les figures 4 à 6. Ces deux flancs sont espacés axialement et réunis entre eux par des ponts de matière 48 qui s'étendent dans la direction axiale XX.

Le flanc 44 (figure 2) comprend trois découpes radiales 50 situées à 90° les unes des autres qui facilitent la déforma tion de l'anneau ouvert, notamment l'écartement de ses branches, comme on le verra plus loin. De la même manière, le flanc 46 comprend trois découpes analogues 52 (figures 4 à 6) qui ont la même fonction que les découpes 50.

Les ponts de matière 48, en combinaison avec les flancs 44 et 46, définissent une gorge périphérique en forme de U, tournée vers l'axe XX et propre à appuyer d'une part contre la collerette 22 (plus précisément contre sa partie annulaire 30) (figures 1 et 3) et d'autre part contre une région annulaire 54 (figures 1 et 3) du bourrelet 18.

On comprendra que les découpes 50 et 52 aménagées respectivement dans les flancs 44 et 46 contribuent à la formation des butées de retenue axiales précitées et à la souplesse (déformation élastique) du collier 10.

Comme on peut le voir aussi sur la figure 2, les extrémités 40 des branches 38 sont munies de profils de guidage 56 destinés à faciliter l'écartement des branches lors de la mise en place du collier et à faciliter l'engagement des butées de retenue. Ces profils de guidage 56 définissent deux rampes en vis à vis et chacun d'eux s'étend entre les flancs 44 et 46 précités.

Selon une caractéristique essentielle de l'invention, le collier ouvert est muni d'au moins un organe de verrouillage 60 (figures 1 et 3), ici deux organes de verrouillage (figures 4 à 6). Ces deux organes de verrouillage 60 sont formés par découpe dans le flanc 46. Dans l'exemple, ces deux organes de verrouillage 60 sont réalisés chacun sous la forme d'une languette déformable dont une extrémité 62 est rattachée à un bord périphérique 64 du collier et dont une autre extrémité 66 est munie d'une dent 68 s'étendant dans une direction sensiblement axiale et agencée pour coopérer avec la région d'engagement 34 précitée (figures 1 et 3).

Les deux languettes 60 s'étendent symétriquement par rapport à l'axe de symétrie S (figure 4) et, dans l'exemple, elles forment entre elles un angle A de 90°. On remarquera que les organes de verrouillage 60 alternent avec les butées axiales de retenue. Comme on le voit sur la figure 4, le flanc 46 comprend deux prolongements 70 qui forment également entre eux un angle A, et à partir desquelles sont reliées les extrémités respectives 62 des deux languettes.

Les languettes sont dimensionnées et conçues pour que leurs dents respectives 68 puissent s'engager dans la région d'engagement 34 précitée.

Le dispositif de raccordement des figures 1 à 3 s'utilise de la manière suivante. Après emboîtement des régions d'extrémité des deux tubulures avec insertion du joint 26, l'anneau ouvert 10 est présenté latéralement comme montré sur la figure 4. Les profils de guidage 56 viennent en appui contre la partie cylindrique 32 de la collerette 22, c'est à dire contre la partie de plus grand diamètre de l'assemblage ainsi obtenu. L'anneau est ensuite déplacé dans une direction d'introduction D (figure 4) qui correspond également avec son axe de symétrie S.

À mesure que le collier ouvert est engagé, dans la direction D précitée, les branches 38 s'écartent mutuellement en déformant le collier. Cette déformation est facilitée par la présence des découpes dans les flancs 44 et 46. Lors de cet écartement, les profils de guidage 56 garantissent que les butées de retenue axiales s'engagent dans le bourrelet et la collerette des tubulures, cela pendant le mouvement d'assemblage du collier.

Une fois le collier complètement engagé (figure 6), la collerette 22 vient en appui contre la partie intérieure du fond incurvé 36 et les branches 38 se rapprochent mutuellement, les extrémités 40 des branches définissant alors une ouverture 42 (figure 6) dont la distance est inférieure au diamètre extérieur de la collerette.

Au cours de ce mouvement d'introduction, les deux organes de verrouillage 60 s'écartent dans la direction axiale et leurs dents respectives 68 sont écartées dans la direction axiale pour venir ensuite se déplacer en sens inverse, dans la même direction axiale et s'engager dans la région d'engagement 34, comme montré sur la figure 3. La présence de ces deux organes de verrouillage, qui se situent dans la région du fond incurvé 36, donc à l'opposé de l'ouverture 42 contribue au maintien du collier en position d'assemblage. De la sorte, ce collier peut être réalisé également en matière plastique, par exemple en une matière du type polyamide.

Il en résulte que le collier ne peut se démonter de manière inopinée.

Si l'on souhaite démonter le collier ouvert, il est nécessaire de déformer ou casser volontairement le ou les organes de verrouillage afin de permettre l'extraction du collier dans une direction opposée à la direction d'introduction D.

On se réfère maintenant à la figure 7 qui montre deux tubulures et un dispositif de raccordement analogues à ceux de la figure 1. Comme on peut le voir sur les figures 3 et 7, il existe un jeu annulaire 72 entre la partie cylindrique 28 de la collerette 22 et l'intérieur du flanc 44. On profite de la présence de ce jeu 72 pour y loger l'extrémité 74 d'une lèvre souple d'étanchéité 76 dont une autre extrémité 78 se raccorde à une paroi 80 qui peut, par exemple, faire partie d'un boîtier logeant l'échangeur de chaleur 24 (figure 7).

Dans la variante de réalisation de la figure 8, l'organe de verrouillage 60 est analogue à celui représenté aux figures 1 à 3. En revanche, la collerette 22 présente un profil d'extrémité différent, qui se termine par une face annulaire 82 dans laquelle sont aménagées des fentes 84 appropriées. Ces fentes 84 constituent une autre forme de réalisation d'une région d'engagement pour coopération avec la dents 68 du ou des organes de verrouillage.

De manière générale, le dispositif de l'invention comporte un ou plusieurs organes de verrouillage qui coopèrent avec une région d'engagement, cette dernière étant formée par l'une au moins des tubulures.

L'invention trouve une application générale aux circuits de fluide et une application particulière aux circuits de fluide de véhicules automobiles.

## Revendications

1. Dispositif pour le raccordement coaxial de deux tubulures, par coopération d'une région d'extrémité (16) d'une première tubulure (12) avec une région d'extrémité (20) d'une seconde tubulure (14), la première tubulure comportant un bourrelet (18) propre à être reçu dans une collerette (22) de la seconde tubulure, le dispositif comprenant un collier ouvert (10) réalisé en un matériau élastiquement déformable et présentant un fond (36) se prolongeant par deux branches (38) ayant des extrémités respectives (40) qui définissent l'ouverture (42) du collier ouvert (10) et qui sont susceptibles de s'écarter lors de la mise en place du collier ouvert (10) dans une direction d'introduction (D) généralement radiale par rapport à l'axe (XX) des tubulures (12, 14) et de se rapprocher ensuite après mis en place du collier ouvert (10),
**caractérisé en ce que** le collier ouvert (10) est muni de butées de retenue (44, 46, 48) propres à exercer un appui axial contre la collerette (22) et contre le bourrelet (18) pour les solliciter l'un vers l'autre, et
d'au moins un organe de verrouillage (60) situé dans la région du fond (36) et réalisé sous la forme d'une languette déformable dont une extrémité (62) est rattachée à un bord périphérique (64) du collier ouvert (10) et dont une autre extrémité (66) est munie d'une dent (68) s'étendant dans une direction sensiblement axiale et agencée pour coopérer avec une région d'engagement (34 ; 84) prévue dans la région d'extrémité (16, 20) de l'une au moins des tubulures afin d'empêcher le collier ouvert (10), une fois mis en place, de se déplacer dans une direction opposée à sa direction d'introduction (D).

2. Dispositif selon la revendication 1, **caractérisé en ce que** la languette déformable s'étend dans une direction sensiblement radiale à partir du bord périphérique (64) du collier ouvert (10).

3. Dispositif selon l'une des revendications 1 à 2, **caractérisé en ce que** le collier ouvert (10) comprend deux flancs (44, 46) en forme générale de C espacés axialement, et **en ce que** l'organe de verrouillage (60) est découpé dans l'un (46) des flancs.

4. Dispositif selon la revendication 3, **caractérisé en ce que** les deux flancs (44, 46) en forme générale de C du collier ouvert (10) sont reliés entre eux par des ponts de matière (48) qui s'étendent dans la direction axiale (XX).

5. Dispositif selon l'une des revendications 3 et 4, **caractérisé en ce que** chacune des butées de retenue (44, 46, 48) présente une section générale en forme de U avec deux branches d'appui (44, 46) découpées respectivement dans les deux flancs du collier ouvert.

6. Dispositif selon l'une des revendications 1 à 5, **caractérisé en ce que** le collier ouvert (10) comprend au moins deux organes de verrouillage (60) qui alternent avec des butées de retenue (44, 46, 48).

7. Dispositif selon l'une des revendications 1 à 5, **caractérisé en ce que** le collier ouvert (10) admet un axe de symétrie (S) passant par le milieu de l'ouverture (42) et **en ce qu'**il comprend deux organes de verrouillage (60) qui s'étendent symétriquement de part et d'autre de l'axe de symétrie.

8. Dispositif selon l'une des revendications 1 à 7, **caractérisé en ce que** les extrémités (40) des branches (38) du collier ouvert (10) sont munies de profils de guidage (56) pour faciliter l'écartement des branches (38) lors de la mise en place du collier ouvert et faciliter l'engagement des butées de retenue.

9. Dispositif selon l'une des revendications 1 à 8, **caractérisé en ce que** le fond (36) du collier ouvert (10) est incurvé.

10. Dispositif selon l'une des revendications 1 à 9, **caractérisé en ce qu'**un jeu annulaire (72) est ménagé entre la collerette (22) et le collier ouvert (10) pour la mise en place d'une lèvre d'étanchéité (76).

11. Dispositif selon l'une des revendications 1 à 10, **caractérisé en ce que** l'organe de verrouillage (60) est réalisé démontable par rupture ou déformation.

12. Dispositif selon l'une des revendications 1 à 11, **caractérisé en ce que** le collier ouvert (10) est réalisé dans une matière plastique.

13. Jeu de tubulures raccordé au moyen d'un dispositif selon l'une des revendications 1 à 12, comprenant une première tubulure (12) ayant une région d'extrémité (16) agencée pour coopérer avec une région d'extrémité (20) d'une seconde tubulure (14), la première tubulure comportant un bourrelet (18) propre à être reçu dans une collerette (22) de la seconde tubulure,
**caractérisé en ce que** l'une au moins des tubulures (12, 14) est aménagée pour définir au moins une région d'engagement (34 ; 84) pour l'organe de verrouillage (60).

14. Jeu de tubulures selon la revendication 13, **caractérisé en ce que** la région d'engagement est un espace annulaire (34) entre le bourrelet (18) et la collerette (22).

15. Jeu de tubulures selon la revendication 13, **caractérisé en ce que** la région d'engagement est une fente (84) aménagée dans une face annulaire (82) de la collerette (22).

## Claims

1. Device for the axial connection of two tubes, by cooperation of an end region (16) of a first tube (12) with an end region (20) of a second tube (14), the first tube including a bead (18) adapted to be received in a flange (22) of the second tube, the device comprising an open collar (10) produced in an elastically deformable material and having a bottom (36) extended by two branches (38) having respective ends (40) that define the opening (42) of the open collar (10) and that are adapted to move apart during fitting of the open collar (10) in an introduction direction (D) that is generally radial relative to the axis (XX) of the tubes (12, 14) and then to move toward each other after fitting of the open collar (10),
**characterized in that** the open collar (10) is provided with retaining abutments (44, 46, 48) adapted to bear axially against the flange (22) and against the bead (18) to urge them toward each other, and
at least one locking member (60) situated in the region of the bottom (36) and taking the form of a deformable tongue one end (62) whereof is attached to a peripheral edge (64) of the open collar (10) and another end (66) whereof is provided with a tooth (68) extending in a substantially axial direction and adapted to cooperate with an engagement region (34; 84) provided in the end region (16, 20) of at least one of the tubes in order to prevent the open collar (10), once fitted, from moving in a direction opposite to its introduction direction (D).

2. Device according to Claim 1, **characterized in that** the deformable tongue extends in a substantially radial direction from the peripheral edge (64) of the open collar (10).

3. Device according to either one of Claims 1 and 2, **characterized in that** the open collar (10) comprises two axially spaced generally C-shaped flanks (44, 46) and **in that** the locking member (60) is cut out from one flank (46).

4. Device according to Claim 3, **characterized in that** the two generally C-shaped flanks (44, 46) of the open collar (10) are connected together by material bridges (48) that extend in the axial direction (XX).

5. Device according to either one of Claims 3 and 4, **characterized in that** each of the retaining abutments (44, 46, 48) has a generally U-shaped section with two bearing branches (44, 46) cut out from respective flanks of the open collar.

6. Device according to any one of Claims 1 to 5, **characterized in that** the open collar (10) comprises at least two locking members (60) that alternate with retaining abutments (44, 46, 48).

7. Device according to any one of Claims 1 to 5, **characterized in that** the open collar (10) has an axis (S) of symmetry passing through the middle of the opening (42) and **in that** it comprises two locking members (60) that extend symmetrically on either side of the axis of symmetry.

8. Device according to any one of Claims 1 to 7, **characterized in that** the ends (40) of the branches (38) of the open collar (10) are provided with guide profiles (56) to facilitate the movement apart of the branches (38) on fitting the open collar and to facilitate the engagement of the retaining abutments.

9. Device according to any one of Claims 1 to 8, **characterized in that** the bottom (36) of the open collar (10) is curved.

10. Device according to any one of Claims 1 to 9, **characterized in that** an annular clearance (72) is provided between the flange (22) and the open collar (10) for fitting a lip seal (76).

11. Device according to any one of Claims 1 to 10, **characterized in that** the locking member (60) is adapted to be demountable by breaking or deforming it.

12. Device according to any one of Claims 1 to 11, **characterized in that** the open collar (10) is produced in a plastic material.

13. Set of tubes connected by means of a device according to any one of Claims 1 to 12, comprising a first tube (12) having an end region (16) adapted to cooperate with an end region (20) of a second tube (14), the first tube including a bead (18) adapted to be received in a flange (22) of the second tube,
**characterized in that** at least one of the tubes (12, 14) is adapted to define at least one engagement region (34; 84) for the locking member (60).

14. Set of tubes according to Claim 13, **characterized in that** the engagement region is an annular space (34) between the bead (18) and the flange (22).

15. Set of tubes according to Claim 13, **characterized in that** the engagement region is a slot (84) provided in an annular face (82) of the flange (22).

## Patentansprüche

1. Vorrichtung zur koaxialen Verbindung von zwei Rohrleitungen durch Zusammenwirkung eines Endbereichs (16) einer ersten Rohrleitung (12) mit einem Endbereich (20) einer zweiten Rohrleitung (14), wobei die erste Rohrleitung einen Wulst (18) aufweist, der in einem Bund (22) der zweiten Rohrleitung aufgenommen werden kann, wobei die Vorrichtung eine offene Rohrschelle (10) enthält, die aus einem elastisch verformbaren Material hergestellt ist und einen Boden (36) aufweist, der durch zwei Schenkel (38) verlängert wird, die jeweilige Enden (40) haben, welche die Öffnung (42) der offenen Rohrschelle (10) definieren und sich beim Einsetzen der offenen Rohrschelle (10) in einer allgemein radialen Einführrichtung (D) bezüglich der Achse (XX) der Rohrleitungen (12, 14) auseinander spreizen und sich anschließend nach dem Einsetzen der offenen Rohrschelle (10) wieder einander annähern können,
**dadurch gekennzeichnet, dass** die offene Rohrschelle (10) mit Rückhalteanschlägen (44, 46, 48) versehen ist, die eine axiale Auflage gegen den Bund (22) und gegen den Wulst (18) ausüben können, um sie zueinander zu beaufschlagen, und
mit mindestens einem Verriegelungsorgan (60) versehen ist, das sich im Bodenbereich (36) befindet und in Form einer verformbaren Zunge hergestellt ist, von der ein Ende (62) an einem Umfangsrand (64) der offenen Rohrschelle (10) befestigt und ein anderes Ende (66) mit einem Zahn (68) versehen ist, der sich in einer im Wesentlichen axialen Richtung erstreckt und angeordnet ist, um mit einem Einführbereich (34; 84) zusammenzuwirken, der im Endbereich (16, 20) mindestens einer der Rohrleitungen vorgesehen ist, um zu verhindern, dass die offene Rohrschelle (10), wenn sie eingesetzt ist, sich in einer Richtung entgegengesetzt zu ihrer Einführrichtung (D) verschiebt.

2. Vorrichtung nach Anspruch 1, **dadurch gekennzeichnet, dass** die verformbare Zunge sich in einer im Wesentlichen radialen Richtung ausgehend vom Umfangsrand (64) der offenen Rohrschelle (10) erstreckt.

3. Vorrichtung nach einem der Ansprüche 1 bis 2, **dadurch gekennzeichnet, dass** die offene Rohrschelle (10) zwei axial beabstandete Flanken (44, 46) in der allgemeinen Form eines C enthält, und dass das Verriegelungsorgan (60) in einer (46) der Flanken ausgeschnitten ist.

4. Vorrichtung nach Anspruch 3, **dadurch gekennzeichnet, dass** die zwei Flanken (44, 46) in der allgemeinen Form eines C der offenen Rohrschelle (10) miteinander über Materialbrücken (48) verbunden sind, die sich in der axialen Richtung (XX) erstrecken.

5. Vorrichtung nach einem der Ansprüche 3 und 4, **dadurch gekennzeichnet, dass** jeder der Rückhalteanschläge (44, 46, 48) einen allgemein U-förmigen Querschnitt mit zwei Auflageschenkeln (44, 46) hat, die je in den zwei Flanken der offenen Rohrschelle ausgeschnitten sind.

6. Vorrichtung nach einem der Ansprüche 1 bis 5, **dadurch gekennzeichnet, dass** die offene Rohrschelle (10) mindestens zwei Verriegelungsorgane (60) enthält, die sich mit Rückhalteanschlägen (44, 46, 48) abwechseln.

7. Vorrichtung nach einem der Ansprüche 1 bis 5, **dadurch gekennzeichnet, dass** die offene Rohrschelle (10) eine Symmetrieachse (S) hat, die durch die Mitte der Öffnung (42) geht, und dass sie zwei Verriegelungsorgane (60) enthält, die sich symmetrisch zu beiden Seiten der Symmetrieachse erstrecken.

8. Vorrichtung nach einem der Ansprüche 1 bis 7, **dadurch gekennzeichnet, dass** die Enden (40) der Schenkel (38) der offenen Rohrschelle (10) mit Führungsprofilen (56) versehen sind, um das Auseinanderspreizen der Schenkel (38) beim Einsetzen der offenen Rohrschelle zu erleichtern und das Einführen der Rückhalteanschläge zu erleichtern.

9. Vorrichtung nach einem der Ansprüche 1 bis 8, **dadurch gekennzeichnet, dass** der Boden (36) der offenen Rohrschelle (10) gebogen ist.

10. Vorrichtung nach einem der Ansprüche 1 bis 9, **dadurch gekennzeichnet, dass** ein ringförmiger Spielraum (72) zwischen dem Bund (22) und der offenen Rohrschelle (10) für den Einsatz einer Dichtlippe (76) ausgespart ist.

11. Vorrichtung nach einem der Ansprüche 1 bis 10, **dadurch gekennzeichnet, dass** das Verriegelungsorgan (60) durch Brechen oder Verformung ausbaubar hergestellt ist.

12. Vorrichtung nach einem der Ansprüche 1 bis 11, **dadurch gekennzeichnet, dass** die offene Rohrschelle (10) aus einem Kunststoff hergestellt ist.

13. Satz von Rohrleitungen, der mittels einer Vorrichtung nach einem der Ansprüche 1 bis 12 verbunden ist, der eine erste Rohrleitung (12) enthält, die einen Endbereich (16) hat, der angeordnet ist, um mit einem Endbereich (20) einer zweiten Rohrleitung (14) zusammenzuwirken, wobei die erste Rohrleitung einen Wulst (18) aufweist, der in einem Bund (22) der zweiten Rohrleitung aufgenommen werden kann, **dadurch gekennzeichnet, dass** mindestens eine der Rohrleitungen (12, 14) eingerichtet ist, um mindestens einen Einführbereich (34; 84) für das Verriegelungsorgan (60) zu definieren.

14. Satz von Rohrleitungen nach Anspruch 13, **dadurch gekennzeichnet, dass** der Einführbereich ein ringförmiger Raum (34) zwischen dem Wulst (18) und dem Bund (22) ist.

15. Satz von Rohrleitungen nach Anspruch 13, **dadurch gekennzeichnet, dass** der Einführbereich ein Schlitz (84) ist, der in einer ringförmigen Seite (82) des Bunds (22) ausgespart ist.
